(19) Europäisches Patentamt / European Patent Office / Office européen des brevets

(11) EP 4 238 947 B1

# (12) EUROPEAN PATENT SPECIFICATION

(45) Date of publication and mention of the grant of the patent:
**05.06.2024 Bulletin 2024/23**

(21) Application number: **22159518.4**

(22) Date of filing: **01.03.2022**

(51) International Patent Classification (IPC):
***C04B 7/36*** *(2006.01)*

(52) Cooperative Patent Classification (CPC):
(C-Sets available)
**C04B 7/367;** Y02P 40/18 (Cont.)

## (54) METHOD AND PLANT FOR TREATING RAW-MEAL IN A CEMENT CLINKER MANUFACTURING PROCESS

VERFAHREN UND ANLAGE ZUR BEHANDLUNG VON ROHMEHL IN EINEM ZEMENTKLINKERHERSTELLUNGSPROZESS

PROCÉDÉ ET INSTALLATION DE TRAITEMENT DE FARINES CRUES DANS UN PROCESSUS DE FABRICATION DE CLINKER DE CIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.09.2023 Bulletin 2023/36**

(73) Proprietor: **Südbayerisches Portland-Zementwerk Gebr. Wiesböck & Co. GmbH**
**83101 Rohrdorf (DE)**

(72) Inventors:
- **Stadler, Philipp**
  **83101 Rohrdorf (DE)**
- **Haas, Michael**
  **83101 Rohrdorf (DE)**
- **Dr. Leibinger, Helmut**
  **83101 Rohrdorf (DE)**

(74) Representative: **Lohr, Jöstingmeier & Partner**
**Junkersstraße 3**
**82178 Puchheim/München (DE)**

(56) References cited:
**WO-A1-2021/246317 WO-A2-02/04377**

- **ROMAN MATTHESSEN ET AL: "Electrocarboxylation: towards sustainable and efficient synthesis of valuable carboxylic acids", BEILSTEIN JOURNAL OF ORGANIC CHEMISTRY, vol. 10, 27 October 2014 (2014-10-27), pages 2484-2500, XP055648781, DOI: 10.3762/bjoc.10.260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



(Cont. next page)

(52) Cooperative Patent Classification (CPC): (Cont.)

C-Sets
**C04B 7/367, C04B 7/425**

## Description

### Field of the invention

The invention relates to the field of cement clinker manufacturing and in particular to the field of raw-meal processing in cement clinker manufacturing.

### Description of the related art

Cement clinker, briefly as well referred to as 'clinker', is the basis for concrete and hence an important intermediate product in the building-construction industry. The cement clinker process, or briefly 'clinker process' has been described in many publications (see e.g. Dr. Harder "Der Herstellungsprozess", published in ZKG-Handbuch Zementanlagenbau 2013/2014, p. 20 to 37, Bauverlag BV, Güters-loh) and hence we will reiterate only the basic steps: First, clay and limestone are dried and milled to obtain a so called "raw-meal". Subsequently, this raw meal is heated up until the Calcium carbonate (CaCOs) of the limestone decays into Calcium oxide (CaO) and Carbon dioxide ($CO_2$). The corresponding reaction

$$CaCO_3 \underset{heat}{\longrightarrow} CaO + CO_2 \qquad \text{(eq 1)}$$

is referred to as decarbonation or calcination step. In state-of-the-art cement clinker plants the raw meal calcination takes place mainly in a so called *"calciner",* being a heated reactor upstream of a kiln for sintering the calcined raw-meal to clinker. The $CO_2$ being released by the calcination step is typically a part of the exhaust gas of the calciner and hence of the cement clinker line.

Sintering takes place typically at 1350°C to 1550°C, often 1450°C are reported. The hot clinker is discharged to a clinker cooler, being a heat exchanger to recuperate the heat from the hot clinker while in turn cooling the clinker down. In typical clinker cooler installations air (or another coolant) is blown through a clinker bed on a cooling grate and thereby heated up. The hot air is provided as so called *"secondary air"* to the kiln and as so called *"tertiary air"* to the calciner. This process requires a huge amount of thermal energy, being produced generally by burning carbon based fuels (coal, natural gas, organic waste, paper, tires, plastics, ... ). Hence, the process not only releases a huge amount of $CO_2$ in the calcination step, in addition, the fuel burn as well provides for a significant $CO_2$ release. Presently (2022), it is estimated that the clinker production contributes to about 8% of the world's $CO_2$ emissions. Efforts have been made to adapt the clinker process to reduce the $CO_2$-emissions of the clinker process. One of these is a so called *carbon-capture and sequestration* ("CSS") approach. In the CSS approach, the clinker process is modified to produce exhaust gas with a high $CO_2$ concentration. The $CO_2$ may then be stored in deep geological formations.

WO 2021/246317 suggested to replace fossil fuels in a cement clinker plant by green hydrogen. To this end, after dedusting the flue these NOx, SOx and water (H2O) are removed and the CO2 in the fuel gas is subjected to a Sabatier process. The resulting methane stream fuels the burners in the cement clinker line.

Roman Matthessen, Jan Fransaer, Koen Binnemans and Dirk E. De Vos: Electrocarboxylation: towards sustainable and efficient synthesis of valuable carboxylic acids (Beilstein Journals, Beilstein J. Org. Chem. 2014, 10, 2484-2500) provide a review on methods used in the electrochemical synthesis of carboxylic acids from carbon dioxide.

### Summary of the invention

The problem to be solved by the invention is to reduce the $CO_2$-emission of the clinker process while avoiding the costs for storing the $CO_2$ in geological formations.

Solutions of the problem are described in the independent claims. The dependent claims relate to further improvements of the invention.

In an embodiment, the invention provides a method. The method enables to remove at least a portion of the $CO_2$ being produced in a cement clinker line or components of the cement clinker line from the exhaust gas of the cement clinker line. The method may comprise converting a $CaCO_3$ comprising raw meal into calcined raw meal and at least $CO_2$. The $CaCO_3$ comprising raw meal is usually ground limestone and may comprise other components like, for example, clay. In this process step it is only relevant that the limestone comprising raw meal comprises at least CaCO3. The term limestone comprising raw meal shall be considered to include any other $CaCO_3$ source as well and in this sense is a synonym for $CaCO_3$-comprising raw meal or simply raw meal. This *"raw meal"* is to be distinguished from the terms *"intermediate raw meal"* and *"calcined raw meal",* which will be explained below.

Alternatively or in addition, the method may comprise sintering calcined raw meal in a kiln, thereby clinker. Further $CO_2$ may be produced by burning carbon-based fuels to heat the kiln. In addition, in some cement clinker line installations, the raw meal provided to the kiln it not or only partially calcined, i.e., the reaction described by (eq 1) may take place in the kiln as well. But there are as well kilns which essentially produce no $CO_2$, be it because the fuel being used in Hydrogen ($H_2$) or because they are heated by electricity- the latter being a alternative under discussion for future cement clinker lines. The method may further comprise separating at least a portion of the $CO_2$ from the calcined raw meal and/or the clinker, respectively. Such separation can be obtained by filtering or other dedusting techniques (like for example inertial separation or electrostatic precipitation). Only for linguistic simplicity, herein we will not distinguish between filtering, precipitating or other dedusting principles and the verbs *to filter* and the noun *filter* shall be considered to include any other gas-solid separation technique, or more generally any other fluid-solid separation technique as well. Correspondingly herein we will not distinguish between filters, electrostatic precipitators, or inertial separators like, e.g., cyclones.

The separated $CO_2$ may still be mixed with other gases like CO, $N_2$, $H_2O_{(g)}$ or the like which are typically comprised in kiln exhaust gas and/or calciner exhaust gas. Preferably, in another step, at least a portion of the separated $CO_2$ may be dissolved in a first carboxylic acid and/or a first sulfonic acid. Dissolving can be obtained by simply providing a flow of $CO_2$ into the acid, which may be an aqueous acid. In industrial cement plants one may use a scrubber for the dissolving step, herein referred to as first scrubber or dissolving scrubber. "First" shall not imply that there is necessarily a second scrubber, but instead enable to linguistically distinguish the optional first scrubber from other optional scrubbers that will be explained below.

The method preferably further comprises reducing the dissolved $CO_2$ electrochemically. The solvent of the $CO_2$ hence is an electrolyte or at least a constituent of the electrolyte. This reduction may take place at cathode of an electrolytic cell and can be summarized as:

$$2CO_2 + 4H^+ + 2H_2O + 4e^- \rightarrow 2HCO_2H + 2H_2O \qquad (eq\ 2)$$

Other carboxylic acids may be formed similarly:

$$nCO_2 + (6n - 4)H^+ + 2H_2O + (6n - 4)e^- \rightarrow H_{2n-1}C_nO_2H + 2nH_2O \qquad (eq\ 3)$$

Further, co-reactions like the followings have been observed.

$$CO_2 + 2H^+ + 2e^- \rightarrow CO + H_2O \qquad (eq\ 4)$$

$$2H^+ + 2e^- \rightarrow H_2 \qquad (eq\ 5)$$

Alternatively and/or in addition to dissolving the $CO_2$, the separated $CO_2$ may be liquified (e.g. at -20°C and 20bars) (e.g using a $CO_2$-liquefier). Such liquified $CO_2$ may be reduced electrochemically. This reduction may take place at cathode of an electrolytic cell and can be summarized as:

$$2CO_{2,l} + 4H^+ + 2H_2O + 4e^- \rightarrow 2HCO_2H + 2H_2O \qquad (eq\ 6)$$

This reaction may be generalized as well and then reads:

$$nCO_{2,l} + (6n - 4)H^+ + 2H_2O + (6n - 4)e^- \rightarrow H_{2n-1}C_nO_2H + 2nH_2O \qquad (eq\ 7)$$

The freezing point of water-formic acid at a given stoichiometric ratio is significantly below the freezing point of water. For example, at a given stoichiometric ratio of 1:1 it is -35.5°*C*, but changing the stoichiometric ratio result in shift of the freezing point. Similarly, the freezing point of water-carboxylic acid mixtures is below 0°C. Depending on the temperature and pressure of the liquified $CO_2$, it may be advantageous to add a (preferably strong) acid in the anode chamber of the electrolytic cell to prevent freezing of co-transferred water. Examples for such acids may be sulfuric acid, fluoroboric acid or any other acid that is liquid and compatible with the preferred anode reaction and $O_2$ evolution. Only to avoid misunderstandings, it is recalled that an acid is considered to be strong if the $pK_a$-value is at or below -2.

The first carboxylic acid and/or first sulfonic acid may be used as a protonic (preferably aqueous) electrolyte and as well to adjust the pH-value in the anode chamber of the electrolytic cell. Electrolytic reduction of the $CO_2$ may convert the $CO_2$ into a second carboxylic acid. A byproduct of the reduction may be CO. $H_2$ may be considered as a further (competing) byproduct. Preferred examples of the first as well as of the second carboxylic acid are formic acid (HCOOH); systematic IUPAC name: methanoic acid) and acetic acid ($CH_3COOH$; systematic IUPAC name: ethanoic acid). Using an acid as electrolyte disfavors the formation of carbonate ions described by:

$$2OH^-_{(aq)} + CO_{2\,(g)} \rightarrow CO_{3\,(aq)}^{2-} + H_2O \quad (eq\ 8)$$

This carbonate formation process described by *(eq 8)* takes place if alkaline conditions are present in the vicinity of the electrode. Thus, rather than converting $CO_2$ to a usable carbon based product, e.g. a carboxylic acid, for every $H_2O$-electron pair transferred during $CO_2$-reduction one hydroxide ion *($OH^-$)* is formed. Two of these hydroxide ions remove a $CO_2$ from the process by forming carbonate instead of the intended $CO_2$-reduction based product.

In other words, the preferred acidic (*$pH$* < 7) electrolyte reduces the consumption of the $CO_2$ in the electrolyte and hence increases carbon utilization efficiency. For the carboxylic acids, like e.g., formic acid and acetic acid avoiding the formation of $HCO_3^-$ results in saving six electrons per $CO_2$ reacted, that otherwise must be provided by the current source. Electrolyzing in an acidic regime thus reduces the required electrical energy per reacted $CO_2$-molecule. Without being bound to theory, it is believed that if $H_3O^+$ is the proton source for $CO_2$-reduction no or almost no $OH^-$ is generated. Accordingly, the carbonate formation process may be at least almost fully avoided. The effect increases with decreasing pH: Alkaline conditions in the vicinity of the cathode (local alkaline conditions) may occur due to the local consumption of protons during $CO_2$ conversion, but these local alkaline conditions can be mitigated by increasing the propagation of protons to the proton-consumption zone in the vicinity of the cathode. An increase in the proton concentration gradient from the rest of the electrolyte to the proton-consumption zone, i.e., a decrease of the pH in the rest of the electrolyte increases the diffusion rate of the protons towards the consumption zone and hence results in a decrease of the alkaline zone for a given current density. A preferred acid that may be added and/or be present in the cathode chamber may be methane sulfonic acid, as it lowers the pH, is essentially not oxidizing and contributes to an increased $CO_2$-solubility in the chamber.

The alkali ion concentration $c_{alkali}$ of the electrolyte in which the $CO_2$ is dissolved is preferably at or below 0.5mol/liter, in a preferred example the alkali concentration $c_{alkali}$ is negligible (essentially zero). More generally, $c_{alkali} \le c_{max}$, wherein $c_{max}$ *mol/liter* $\in$ {0.5, 0.49, 0.475, 0.45, 0.4, 0.3, .0.2, 0.1, 0.01, 0.001, 0}.

The electrolytic reduction may preferably take place in an electrolytic cell having at least a first chamber and a second chamber. The two chambers are preferably separated by a proton permeable membrane. A cathode may be located in the cathode chamber, which hence may as well be referred to as *cathode chamber.* The protonic electrolyte with $CO_2$ being dissolved may be filled and/or provided in the cathode chamber, preferably at least to a level being above the lower end of the cathode. Preferred examples of the protonic electrolyte are carboxylic acid and methane sulfonic acid. Thereby the solubility of $CO_2$ can be raised by factor of 5 compared to pure water. Hence, the activity of $CO_2$ at the cathode.

In a preferred example, the temperature of the protonic electrolyte is lowered below the critical temperature of $CO_2$ (31.0°C) to thereby obtain liquified $CO_2$ and acid-water.

An anode may be located in the second chamber, as well referred to as *"anode chamber"*. Water and/or another proton donor may be filled into the anode chamber, again preferably at least to a level being above the lower end of the anode. It comes without saying that the electrolytic cell may be an electrochemical flow cell. In this case, the cathode chamber and the anode chamber may each have at least one inlet and at least one outlet. At the anode the water and/or another proton donor are/is decomposed into $O_2$ and $H^+$ by electrooxidation:

$$2H_2O \rightarrow O_2 + 4H^+ + 4e^- \qquad (eq\ 9)$$

For example, the cathode being used in the reducing step may preferably comprise or consist of at least one of Ag, Au, Cd, Mn, In, Sn, Hg, Tl, Bi, Pb, Cu and/or doped graphene. Of course any composite catalyst comprising at least one of these materials may be used as well. The corresponding method step may be summarized as reducing $CO_2$ at an Ag, Au, Cd, Mn, In, Sn, Hg, Tl, Bi, Pb, Cu and/or doped graphene comprising cathode. These cathode materials are catalysts for the formation of carboxylic acids (and/or CO), in particular of formic acid and/or acetic acid, while showing little selectivity for the competing $H_2$-evolution (see *(eq 5),* "HER"). In case graphene is used, it is preferred to use N-doped graphene.

Preferably, the temperature of the protonic electrolyte is set to a value $\theta°C$ which is above the freezing point of the protonic electrolyte. For example, $\theta \in$ {-30, -20, -10, 0, 10, 20, 30, 35, 40, 45, 50, 55, 60, 65, 70}. An upper limit is provided by the boiling temperature of the electrolyte at the given pressure. A preferred range of $\theta$ is about 40 to 80, i.e., $40°C \le \theta°C \le 80°C$, particularly preferred is $50°C \le \theta°C \le 60C$. In this temperature range, electrochemically splitting of $CO_2$ to carboxylic acid and $O_2$ is enthalpy-wise preferred over the competitive hydrogen evolution reaction (HER /

*(eq 5)*). It is believed to be explained by the large activity of $CO_2$ in the protonic electrolyte and the lower reaction enthalpy of $CO_2$ and $H_2O$ to carboxylic acids than to hydrogen (formic acid: +254.kJ/mol vs $H_2$:- 285kJ/mol). Further, as already explained above, the choice of the cathode material may contribute to suppression of the competitive hydrogen evolution reaction. Cathode materials like for example Sn, Pb and Hg (while not excluding the other above mentioned example cathode materials) show a very low selectivity for HER, while showing high selectivity for carboxylic acids, in particular for formic acid.

The optimum temperature relates (i.a.) to the activity (partial pressure) of the $CO_2$ in the cathode chamber and the ionic conductivity of the optional membrane separating the cathode and the anode chambers and may be selected as required. The pressure in the electrolytic cell may be approximately ambient pressure (plus the unavoidable hydrostatic pressure) or an increased pressure, but the pressure may as well be reduced compared to standard conditions (commonly "STP": 273.15 K, 1.000hPa).

Preferably, the method may further comprise withdrawing at least a portion of the first and second carboxylic acid from the electrolytic cell, e.g., via a first and second carboxylic acid outlet. This step allows to maintain the concentration of the dissolved $CO_2$ in the electrolyte high, while at the same time withdrawing the second carboxylic acid from the electrolytic cell as a product or as an intermediate product. This intermediate product chemically binds the carbon of the $CO_2$ which was released in the calcination reaction and/or a by burning carbon-based fuel as explained above. These intermediate products are valuable chemicals having numerous applications for example in the food and/or chemical industry and can be considered as a secondary product of the cement clinker process and/or the cement clinker line. As long as these secondary products are not subjected to combustion, the carbon of the $CO_2$ being released in the cement clinker process remains bound and does not contribute to the corresponding cement clinker line's $CO_2$-emission. At least a portion of the withdrawn carboxylic acid can be used in the dissolving step. The same effect -dissolving $CO_2$ in an electrolytically generated acid - can be obtained by providing a flow of $CO_2$ into the cathode chamber of the electrolytic cell. In other words, the $CO_2$ may be dissolved directly in the cathode chamber. Herein, we do not distinguish between these two possibilities as in any case a $CO_2$ molecule is first dissolved and subsequently reduced at the cathode. The vessel in which dissolving $CO_2$ takes places is in principle irrelevant.

In a preferred example of the invention, a carboxylic acid may be reacted with $CaCO_3$ comprised in the raw meal, thereby converting at least as portion of the raw meal into an intermediate raw meal comprising at least calcium carboxylate. The carboxylic acid may be for example at least a second fraction of the withdrawn carboxylic acid, but it may as well be provided by a different source. Carboxylic acids, in particular those recited herein, are commercially available. This optional reacting is independent from any of the beforementioned steps. This reacting is preferably a part of the optional converting step, which may as well be executed independently from any other step disclosed herein. But as will be apparent from the provided context, it is advantageous to combine it as suggested herein.

It is noted that the term *"second fraction"* does not imply that a first fraction is used in the dissolving step, although it is preferred. The terms *first fraction* and *second fraction* are used only to linguistically distinguish between the two preferred examples and to imply that combining both examples is a particularly preferred example but not required.

In other words, the method may for example comprise at least the step of reacting the raw meal with a carboxylic acid (RHOOH) -regardless of its origin-, thereby producing at least $Ca(ROO)_2$, wherein the symbol "R" represents an organic molecule. For example, the carboxylic acid may be formic acid, being as well referred to as *methanoic acid,* and having the chemical formular $HCO_2H$. Reacting the raw meal with formic acid provides Calcium formate ($Ca(HCOO)_2$). The exothermal chemical reaction reads

$$CaCO_3 + 2HCOOH \rightarrow Ca(HCOO)_2 + H_2O + CO_2 + \Delta H \qquad \text{(eq 10)}$$

Using other carboxylic acids is possible as well and the equation reads:

$$CaCO_3 + 2RCOOH \rightarrow \mathrm{Ca(RCOO)_2} + H_2O + CO_2 + \Delta H \qquad \text{(eq 11)}$$

In practice, one simply has to mix the raw meal with the a carboxylic acid (ROOH) and/or sulfonic acid ($RSO_2OH$) in a first reactor to obtain the Ca-salt (calcium carboxylate, $Ca(RCOO)_2$) of the respective carboxylic acid. The $CO_2$ enters the gas phase and can be easily separated from the calcium formate (eq 10)and/or or more generally calcium carboxylate (eq 11) being solids. The raw meal has been converted, but not yet to calcined raw meal but into another intermediate product raw, we will refer to as intermediate raw meal. The intermediate raw meal may thus comprise one or more a calcium carboxylate(s). The amount of $CaCO_3$ in the intermediate raw meal is significantly reduced, compared to the initial raw meal. Preferably, the $CaCO_3$ -content of the intermediate raw meal is at least almost zero (within one of 25%, 10%, 7.5%, 5%, 2.5% or within 1% of the content in the initial raw meal). The intermediate raw meal hence comprises or consist of calcium carboxylate, for example calcium format.

The water ($H_2O$) on the right hand sides of (eq 10) and/or (eq 11) may be bound to the solid as water of crystallization, provided the temperature in the corresponding reaction vessel (first reactor) is below the boiling point of

water for the prevailing pressure. Preferably, temperatures $T_{eq10}$ and/or $T_{eq11}$ during reaction (eq 10) and/or (eq 11), respectively are above the boiling point of water. These temperatures are not critical, but of course should be below the decomposition temperature of the carboxylate, in the example of providing Calcium formate, about $200°C \pm 25°C$ have shown to be particularly favorable ($175°C \leq T_{eq2} \leq 225°C$). In this example, the water is gaseous and is preferably withdrawn, i.e. separated from the calcium carboxylate. More generally, a reasonable range for temperatures $T_{eq2}$ and $T_{eq3}$ is between -20° and 250°C, preferably between 100°C and 225°C, i.e. $-20°C \leq T_{eq_2} \leq 250°C$ and $-20°C \leq T_{eq_3} \leq 250°C$, preferably $100°C \leq T_{eq_2} \leq 225°C$ and $100°C \leq T_{eq_3} \leq 225°C$. The $CO_2$ being released during the reaction (eq 10) and/or (eq 11) is preferably withdrawn from the calcium carboxylate ad hence from the intermediate raw meal. The $CO_2$ and $H_2O$ on the product sides of (eq 10) and/or (eq 11) can be withdrawn as a gas mixture from the first reactor. Subsequently, the $CO_2$ and the $H_2O$ may be separated easily by condensing the $H_2O$. The thereby released thermal energy can be used as process heat. The $CO_2$ may be subjected to electrolytic reduction as set out above.

Subsequently, the intermediate raw meal comprising the calcium carboxylate may preferably be heated to decompose the calcium carboxylate. During the heating process, first the water of crystallization is released between 110°C and 120°C. Releasing water of crystallization is of course optional. It can be omitted, e.g., if formation of the calcium carboxylate took place at temperatures above the boiling temperature of water. Preferably, this water of crystallization or potential residual gaseous water is withdrawn from the intermediate raw meal obtained by the reacting step (i.e. the such treated raw meal, which is, e.g., the calcium carboxylate and/or calcium sulfonate comprising raw meal). Further heating leads to a decomposition of the calcium carboxylate $Ca(ROO)_2$, to thereby obtain Calcium oxide (CaO). In the example of the calcium carboxilate $Ca(ROO)_2$ being Calcium formate $Ca(HCOO)_2$, the corresponding reactions of calcium formate decomposition read:

$$Ca(HCOO)_2 \xrightarrow{T_{eq12}} CaO + CO_2 + HCOH$$

$$Ca(HCOO)_2 \xrightarrow{T_{eq12}} CaO + CO_2 + CO + H_2O$$

$$Ca(HCOO)_2 \xrightarrow{T_{eq12}} CaO + 2CO_2 + H_2$$

(eqs 12)

In the general case of calcium carboxylate it reads:

$$Ca(RCOO)_2 \xrightarrow{T_{eq13}} CaO + CO_2 + RCOH$$

$$Ca(RCOO)_2 \xrightarrow{T_{eq13}} CaO + CO_2 + CO + RCOR$$

$$Ca(RCOO)_2 \xrightarrow{T_{eq13}} CaO + 2CO_2 + R_2$$

(eqs 13)

These steps may take place in a so called first heater, being explained below in more detail. During the heating process being described by (eqs 12) and/or (eqs 13), gaseous side products, in particular $CO_2$ and CO are preferably withdrawn from the process, and hence from the calcined raw meal comprising at least CaO, to thereby reduce, if not fully avoid unintended re-carbonation of the CaO to $CaCO_3$. Further, the above-described optional removal of gaseous $H_2O$ reduces the possibility for the formation of $CO_2$, CO and $H_2$. The amount of these side products may hence be kept small and the main products are CaO and the aldehyde $H_2CO$ (formaldehyde) or more generally *RCOH* and RCOR (ketone).

The required decomposition temperature $T_{eq12}, T_{eq13}$ depends on the organic rest R. In the example of (eqs 12), the rest R is the formate having a decomposition temperature well above 400°C (Fletcher reports decomposition of Formaldehyde at 569°C, Fletcher C. J. M. 1934, The thermal decomposition of formaldehyde Proc. R. Soc. Lond. A 146: 357-362 http://doi.org/10.1098/rspa.1934.0160). Calcium format decomposition starts at approximately 400°C, hence it is favorable to select $T_{eq2}$ to be at or above 380°C, but well below the sintering temperature of the raw meal and the formate's decomposition temperature. Heating to the sintering temperature of 1350°C to 1550°C would provide cement clinker and is thus possible, as cement clinker is intended final product, but the aldehyde would be either burnt or pyrolyzed, depending on the process conditions. Instead, it is suggested to withdraw the aldehyde obtained by the

reactions (eqs 12)and/or (eqs 13) prior to sintering the raw meal. The such obtained aldehyde(s) can be used as valuable starting materials in the chemical industry, e.g. to manufacture polymers. These aldehydes essentially bind the carbon, which otherwise would have been emitted as $CO_2$ and at the same time are a secondary product of the cement clinker line.

It is noted that the literature on thermal decomposition of calcium carboxylates generally reports a decomposition of calcium carboxylates to $CaCO_3$ (see e.g. A. Valor et al. Thermal decomposition of the calcium salts of several carboxylic acids; Thermochimica Acta 389 (2002), p. 133-130; https://doi.org/10.1016/S0040-6031(02)00010-2). However, by removing the gaseous components of the decomposition reaction (being described above), the formation of the $CaCO_3$ can be almost fully avoided. Another aspect is the presence of $H_2O$ which favors the decomposition of the Ca carboxylates to Ca hydroxide ($Ca(OH)_2$, which can be dehydrated to CaO. Further, the presence of acidic oxides like ($SiO_2$,$Al_2O_3$, ...), which are usually present in the raw meal of cement clinker lines are believed to suppress recarbonization of CaO to $CaCO_3$. In other words the method step of converting the Ca-salt obtained in the reacting step, into calcined raw meal by thermally decomposing the obtained $Ca(RCOO)_2$ and/or $Ca(RSO_2O)_2$ to thereby obtain at least CaO, $CO_2$ and RCOH and/or RCOR, respectively, may preferably take place in the presence of acidic oxides like for example $SiO_2$,$Al_2O_3$, *etc.*

In any of the above explained variants being summarized by (eqs 12) and/or (eqs 13), the calcium carbonate initially provided by the limestone of the raw meal (see left side of (eq 10) and/or (eq 11)) is converted into calcium oxide and hence calcined raw meal is provided while requiring significantly lower temperatures than in presently used state of the art calciners in which (eq 1) takes place. By replacing (eq 1) by *(eq* 2)and/or *(eq* 4) with (eqs 12) and/or by the temperature level for obtaining calcined raw meal is reduced by a factor of about $\frac{1}{2}$ (on the Celsius scale). This significantly lower temperature regime reduces installation costs for the heater. Use of an indirect heat exchanger as heater is much easier due to the reduced temperature level. The gases on the right hand side of (eqs 12) and/or (eqs 13) can be withdrawn and the $CO_2$ can be separated from the other components by condensing the other components. The $CO_2$ being produced by the converting step (which may as well be referenced to as heating step) may hence be electrolytically reduced as suggested above.

The optional method steps as described by (eqs 12) and/or (eqs 13) may be summarized in that the method preferably comprises, e.g. as a part of the optional converting step, heating the intermediate raw meal at least to the decomposition temperature of the calcium carboxylate comprised therein, thereby obtaining at least calcined raw meal and the corresponding aldehyde and/or ketone. This aldehyde and/or ketone is another new secondary product of the cement clinker process and the corresponding cement clinker line. This secondary product can be used as a raw material or platform chemical, e.g. in the polymer industry.

Accordingly, these secondary products are preferably separated from the calcined raw meal. After the optional converting step, the such obtained aldehyde(s) are still gaseous, and separation of the aldehydes and the calcined raw meal can take place by any suited dedusting process, herein simply referred to as filtering (see above). The calcined raw meal may subsequently be sintered to cement clinker.

The decarbonized raw meal may be sintered in a kiln to cement clinker as is known in the art. Other ingredients may as well be added to the decarbonized raw meal to finalize the composition of the raw meal.

The solid raw meal components as well as the solid intermediate raw meal components as well as the solid calcined raw meal components can be separated easily from the fluid products on the right hand side of the reactions (eqs 12) and/or (eqs 13). In the preferred temperature range of these reactions (eqs 12) and/or (eqs 13) these fluids are gaseous and can be withdrawn by gas solid separation methods like filtration and/or precipitation and/or inertial separation. The fluid components have different condensation temperatures, enabling to subsequently separate the fluid components by distillation. Distillation further enables to recuperate condensation heat which then can be used as process heat again.

The method of producing intermediate and/or calcined raw meal as explained above produces $CO_2$, but the $CO_2$ can be captured easily and requires no or only little gas cleaning. In particular, it is not diluted by Nitrogen as it is in the standard prior art calcination in a so called calciner. In a preferred example, the $CO_2$ being produced by at least one of the reactions (eq 10) to (eqs 13) may be electrochemically reduced to thereby produce formic acid and/or another carboxylic acid. As least a portion of the produced formic acid and/or another carboxylic acid may again be used as $CO_2$-solvant and hence to preferably continuously reduce $CO_2$ being produced in the cement clinker line, e.g. in a kiln and or during calcination of the raw meal, wherein the calcination may be a obtained according to (eq 1) and/or by the method as summarized by (eq 10) to (eqs 13).

Summarizing the optional reacting and the optional converting steps allow to convert the $CO_2$ being inherently released by the decarbonation of the $CaCO_3$ into an aldehyde or ketone. These substances allow to store the carbon being released by conversion of the $CaCO_3$ into CaO for a very long time, e.g., in polymers, and hence environmental effects due to $CO_2$-emissions of cement clinker manufacturing can be significantly reduced, if not fully avoided.

Above, the different aspects of the invention have been described in detail for the variants starting from formic acid as second carboxylic acid. Other examples for second carboxylic acids in (eq 11) are ethanoic acid ($CH_3COOH$),

propionic acid ($CH_3CH_2CO_2H$), butanoic acid ($CH_3CH_2CH_2CO_2H$), pentanoic acid ($CH_3(CH_2)_3COOH$), hexanoic acid ($CH_3(CH_2)_4COOH$), heptanoic acid ($CH_3(CH_2)_5COOH$), octanoic acid ($CH_3(CH_2)_6COOH$), nonanoic acid ($CH_3(CH_2)_7COOH$), decanoic acid ($CH_3(CH_2)_8COOH$), Oxalic acid (HO2C-CO2H), Pyruvic acid ($CH_3COCOOH$), Glyoxylic acid (OCHCOOH), Glycolic acid ($HOCH_2CO_2H$). These acids may as well be mixed in any appropriate ratio. The mixture is as well be referred to as second carboxylic acid. The second carboxylic acid may preferably further comprise water. At this place, we used the systematic IUPAC names instead of the preferred IUPAC names of these substances to ease potential translation of the application and the patent into other languages. As apparent, it is preferred if the second and first carboxylic acid(s) are identical or at least overlap.

Examples for the first carboxylic acid, respectively, used in the dissolving step is at least one acid one of the acids comprised in a list being formed by methanoic acid ($H_2CO_2$), ethanoic acid ($CH_3COOH$), propionic acid ($CH_3CH_2CO_2H$), butanoic acid ($CH_3CH_2CH_2CO_2H$), pentanoic acid ($CH_3(CH_2)_3COOH$), hexanoic acid ($CH_3(CH_2)_4COOH$), heptanoic acid ($CH_3(CH_2)_5COOH$), octanoic acid ($CH_3(CH_2)_6COOH$), nonanoic acid ($CH_3(CH_2)_7COOH$), decanoic acid ($CH_3(CH_2)_8COOH$), Oxalic acid ($HO_2C-CO_2H$), Pyruvic acid ($CH_3COCOOH$), Glyoxylic acid (OCHCOOH), Glycolic acid ($HOCH_2CO_2H$). Optionally, Methane sulfonic acid ($CH_3SO_3H$) may be comprised in the first carboxylic acid as high boiling additive to adjust the pH, as it is a fully dissociating acid. Further, Methane sulfonic acid has a very high $CO_2$ solubility. These acids may as well be mixed in any appropriate ratio. The mixture is as well be referred to as first carboxylic acid. The first carboxylic acid may preferably further comprise water.

An apparatus according to the invention is, e.g., a cement clinker line comprising at least a $CO_2$-source with a $CO_2$-outlet, wherein the $CO_2$-source comprises as least one of a kiln for sintering calcined raw meal into cement clinker, a calciner for converting raw meal into calcined raw meal, and a fuel combustion unit. Essentially any $CO_2$ source in the cement clinker process may be used. The three examples are simply the most prominent examples. The apparatus may further comprise at least a first scrubber, as well referred to as mixer. The first scrubber may have at least a $CO_2$-inlet, wherein the $CO_2$-inlet is connected to the $CO_2$-outlet of the at least one $CO_2$-source. It is not required that the $CO_2$-source provides only $CO_2$. But it is preferred, if the product being provided by the $CO_2$-source has a $CO_2$ concentration of $C_{CO_2}$ of or above $\alpha$ *vol*%, i.e. $C_{CO_2} \geq \alpha$ *vol*%, wherein $\alpha \in \{5, 10, 15, 20, 30, 40, 50, 60, 70, 80, 90, 95, 100\}$. In between of the $CO_2$-source and the $CO_2$ inlet may be other means to prepare the $CO_2$ for being dissolved. For example, in case the $CO_2$ is still hot, it is advantageous to cool it to or below the boiling temperature of the first carboxylic acid and preferably to use the such recuperated energy as process energy. Hence, the $CO_2$-inlet of the first scrubber may be connected to a cold outlet of a heat exchanger, wherein the hot inlet of the heat exchanger may be connected to a hot $CO_2$-source.

An acid inlet of the first scrubber may be connected to at least one source of a first carboxylic. The first scrubber may further have an acid-dissolved $CO_2$-outlet, wherein the term *acid-dissolved $CO_2$-outlet* describes that the corresponding outlet of the first scrubber is configured to provide $CO_2$ being dissolved in an acidic liquid. As already mentioned above the first scrubber may be integrated into, or be formed by a cathode chamber of an electrolytic cell in this case the acid-dissolved $CO_2$-outlet of the first scrubber and the acid-dissolved $CO_2$-inlet of the electrolytic cell are effectively omitted.

The cement clinker line may further comprise the already mentioned electrolytic cell with at least a first fluid chamber with an acid-dissolved $CO_2$-inlet being connected with the acid-dissolved $CO_2$-outlet of the first scrubber. In case the first scrubber is integrated into the first fluid chamber, the acid-dissolved $CO_2$-inlet is simply a $CO_2$-inlet as explained with respect to the first scrubber. The first fluid chamber may further comprise an acid outlet, configured to withdraw a product obtained by $CO_2$-reduction from the electrolytic cell. In this sense the outlet may be configured to provide an acid with a reduced $CO_2$-concentration and may be referred to as *"$CO_2$-depleted acid outlet"*. The first fluid chamber preferably comprises a cathode and may be referred to as cathode chamber. Particularly preferred, are the acid-dissolved $CO_2$-inlet and the acid outlet at opposite sides of the cathode. This location of the acid-dissolved $CO_2$-inlet and the acid outlet enables a flow of the electrolyte comprising the dissolved $CO_2$ from the *acid-dissolved $CO_2$-inlet* to the cathode, reduction of the $CO_2$ at the cathode and a subsequent flow of the product obtained by the reduction to the acid outlet. The term at opposite sides of the cathode shall be considered to reference to the flow direction of the fluid in the vicinity of the cathode in response to pressure gradient from the *acid-dissolved CO2-inlet* to the *acid outlet*.

The electrolytic cell may preferably comprise a second fluid chamber. The first and the second fluid chambers are preferably separated by a proton-permeable membrane. The second fluid chamber may comprise an anode (*anode chamber*). Preferably, the anode chamber, i.e., the second fluid chamber comprises an inlet for a proton donor fluid. An example for such fluid would be simply $H_2O$, providing $O_2$ and $H^+$ (protons) at the anode (see *(eq 9)*). Other fluids providing protons may be used as well. The protons may pass the membrane and react at the cathode with the reduced $CO_2$.

The apparatus, e.g., the cement clinker line, may hence provide the second carboxylic acid as an intermediate product at the acid outlet. Particularly preferred, are the first and the second carboxylic acids identical, which vastly simplifies the process. The second carboxylic acid can be used in the chemical industry or for any other suited purpose, e.g., as a deicing fluid, animal nutrition, feed preservation, and for leather and textile manufacture, to name only a few

possibilities.

The optional calciner may comprise at least a first reactor and/or a first heater, wherein the first reactor further comprises at least a first reactor volume and a $CO_2$-depleted acid inlet being connected to the $CO_2$-depleted acid outlet of the electrolytic cell. The $CO_2$-depleted acid inlet is of course in fluid communication with the first reactor volume, thereby enabling a flow of the $CO_2$-depleted acid from the $CO_2$-depleted acid inlet to the first reactor volume. A raw meal inlet may as well be in fluid communication with the first reactor volume. Accordingly, the first reactor volume may be configured to bring the $CO_2$-depleted acid in contact with the raw meal.

The first reactor may preferably have an intermediate raw meal outlet, wherein the intermediate raw meal outlet may preferably, be in fluid communication with the first reactor volume and/or have a conveyor for conveying the intermediate raw meal to the heater's intermediate raw meal inlet. In this sense the intermediate raw meal outlet is preferably connected by a connection to an intermediate raw meal outlet of the first heater. Typical examples for these intermediate raw meal conveying connections are chutes, screw conveyors, belt conveyors, drag chain conveyors, lorries, etc..

The first heater may further comprise a heating volume, which heating may be in fluid communication with the intermediate raw meal inlet and/or a calcined raw meal outlet. The heating volume hence enables to heat the intermediate raw meal as explained above. Heating may be obtained by indirect or direct heat exchange with a heat carrier medium and/or by electrical heating. The product of this heating process is an aldehyde and/or a ketone and $CO_2$ as summarized in (eqs 12) and/or (eqs 13). The first heater may preferably have a $CO_2$ outlet being connected to the $CO_2$ inlet of the first scrubber. The connection may of course comprise a $CO_2$-reservoir and/or a heat exchanger to recuperate process heat, a dedusting apparatus (a filter) or the like, but in any case allows to provide a flow of $CO_2$ being released in the heating chamber to the $CO_2$ inlet of the first scrubber.

The cement clinker line may further comprise a kiln, wherein the kiln has at least a calcined raw meal inlet and a clinker outlet. The calcined raw meal inlet is connected to the heater's calcined raw meal outlet.

Summarizing, the apparatus is preferably a cement clinker line any may comprises at least a kiln for sintering at least calcined raw meal to cement clinker. The cement clinker line may preferably further comprise at least the first reactor. The first reactor has at least a first inlet. The first inlet may be connected to a raw meal source and/or raw meal reservoir, e.g., via a preheater tower. The first inlet of the reactor may thus as well be referred to herein as raw meal inlet. The first reactor may further have a second inlet. The second inlet may be connected to a source and/or a reservoir of a carboxylic acid. In particular, the carboxylic acid may at least one of the carboxylic acids and/or sulfonic acids listed above and/or in the claims. This second inlet may be referred to as the first reactor's acid inlet. The first reactor preferably may in addition have at least a first outlet. The raw meal inlet, the second inlet and the first outlet are preferably in fluid communication with a first reactor volume. The first reactor hence enables to execute the reacting step, thereby converting the raw meal to an intermediate raw meal. The reactor may have multiple outlets, e.g. to separately withdraw gaseous and solid products of at least one of reactions (eq 10) and/or (eq 11) from the reactor. The first outlet of the first reactor may thus be considered as source for intermediate raw meal.

This intermediate raw meal source is preferably connected at least indirectly, e.g., via conveying means, with a cold inlet of the first heater. The cold inlet is thus an intermediate raw meal inlet. The first heater may be a heat exchanger and/or an electrical heater. The first heater has a heater volume, and the intermediate raw meal inlet may preferably be in fluid communication with the heater volume. Preferably, the heater volume is as well in fluid communication with a (hot) calcined raw meal outlet. The calcined raw meal outlet may be connected to a calcined raw meal inlet of a kiln. The heater may further comprise a gaseous fluid outlet, as well being in fluid communication with the heater volume. The heater hence enables to convert the intermediate raw meal provided from the first reactor to the heater volume in the heater volume to calcined raw meal. The calcined raw meal can be provided to the kiln. Preferably, gaseous products of reactions (eqs 12) and/or (eqs 13) can be withdrawn from the heater. The heater volume can be heated electrically. Alternatively or in addition, the heater may comprise a hot inlet and a cold outlet being connected by a conduit, wherein the conduit is in thermal contact with the heater volume. For example, a wall of the conduit may delimit or define the heater volume. The heater may as well comprise a fireplace.

In a preferred embodiment the cement clinker line comprises a filter having at least a first filter inlet, a first filter outlet and a second filter outlet, wherein the filter is configured to provide solid matter to the first filter outlet and fluid matter to the second filter outlet. The first reactor outlet may be connected to the filter inlet. The first filter outlet may be connected to the cold inlet of the heater.

As already sketched above, the first heater may be a heat exchanger. The first filter outlet may be connected to the cold inlet, i.e., to the intermediate raw meal inlet of the heater. A hot outlet of the heater, i.e., the calcined raw meal outlet may be connected to an inlet of a second filter. The second filter may be configured to provide solid matter to the first second filter outlet, i.e., to the so called calcined raw meal filter outlet, and fluid matter to the second second filter outlet. The first second filter outlet may preferably be connected to the calcined raw meal inlet of the kiln.

Unless explicitly stated all reactions can be performed at norm pressure $p_n$ = 1000hPa. Pressure variations can be accepted in very vide range, for example a pressure deviation $\Delta p_n = \pm 150 hPa$ is considered uncritical.

Herein *filter, filtration* and *to filter* describes any means, method or steps, respectively being suited to separate

a solid from fluid components of mixture, regardless whether the separation is a filtration (i.e. based on a filter mesh allowing only fluid components to pass) and/or a precipitation being based on other principles and/or inertial separation. Examples for precipitators are electrostatic precipitators and cyclones are an example for inertial separators or, when considering batch processing, centrifuges. Similarly, the term filter shall encompass any means for separating a solid from a fluid component of mixture, e.g. filter mesh based filters like paper filters, bag filters and the like as well as precipitators, cyclones, centrifuges, etc.. "Filter" is thus as well synonymous to gas-solid separation means which term may be shortened to gas separator.

In the cement clinker industry, the term raw meal usually describes a ground mining product comprising limestone as calcium (Ca) source and an aluminosilicate source like clay. This typical raw meal may as well be the starting product being subjected to the reaction step as explained above. As apparent from the above, this disclosure focusses on converting the limestone-based component $CaCO_3$ of the raw meal to CaO. The clay-based component of the raw meal may be dragged through the process. Alternatively, only the limestone-based component may be treated as described herein to obtain calcined raw meal and the clay based component(s) of the raw meal may be added at any stage prior to the sintering step. The term raw meal is thus to be understood as matter, being preferably ground, milled, or in any other way comminuted to a meal like consistency. This consistency is not required but preferred, as it increases the surface of the matter. The raw meal may comprise least limestone (as an example for a $CaCO_3$-source) and optionally clay and/or other components. Except for the $CaCO_3$ source in the raw meal, all other components being required to sinter clinker may be added at a later stage of the process, e.g., after or prior to the optional converting step. It does not matter at which stage of the process the non-limestone-based components are added to the raw meal, provided they are added prior to sintering the raw meal.

Herein, we used the verb *to connect* and the corresponding noun *connection* to describe that starting material, an intermediate product or a final product can be withdrawn from a source's outlet and in any way provided to an inlet of another part of the apparatus by means of the connection. A connection for conveying fluids like gases and liquids can be or comprise a pipe, a tube or the like as well as a pump, ventilators, valves or the like to control the flow. Solid matter can be conveyed by connections like chutes, slides, belt conveyors, rollers, lorries. Solid matter can as well be conveyed as dispersed matter in gases and or liquids, in this case pipes, ducts or the like can be used as connections. The terms *to connect* and the corresponding noun *connection* are not to be interpreted in the meaning of an electrical connection or a mechanical coupling, although the intended material transport enabling connection may imply such connections. In case an electrical connection is meant, it will be explicitly stated. Similarly, in case a mechanical connection for transmitting a force and/or or a torque (e.g., some sort of coupling) is intended it will be expressly stated this.

Only to avoid unnecessary discussions it is noted that reducing dissolved $CO_2$ at a cathode implies contacting the $CO_2$-comprising solvent with an electrically conducting (preferably solid) matter, wherein the conducting matter is contacted via an electrical conductor (i.e., electrically connected) to an electron source, e.g., with the corresponding pole of voltage source or a current source. Further, said reducing implies a corresponding oxidation at an anode (see *(eq 9)*). For example, another conducting (preferably solid) matter may be electrically contacted with a cation donor like, e.g., $H_2O$, the latter being an example of a proton donor, i.e. an $H^+$-donor. The another conducting matter is electrically contacted via an electrical conductor to a hole source of a voltage source or current source. Electrically contacting the solvent and the cation donor with the cathode or anode, respectively, can be obtained by dipping at least a portion of the cathode or anode, respectively, in the solvent or cation donor. Herein, we apply the usual convention, that a cation has positive charge and is attracted by coulomb forces by the cathode. Negatively charged molecules or atoms are referred to as anions and are attracted by coulomb forces by the anode. A cation permeable membrane may separate the $CO_2$-solvent and the cation donor fluid. An electrolytic cell comprises at least a chamber for holding a liquid and an anode and a cathode extending into or delimiting the chamber. Preferred examples comprise a at least a cathode chamber with a cathode, the so-called cathode chamber, and a anode chamber with an anode, the so called anode chamber. The cathode chamber and the anode chamber are preferably separated by a semi-permeable membrane, e.g., by a proton-permeable membrane. Each chamber may have an inlet and/or an outlet for refilling and withdrawing fluids from the chambers. For a more detailed review on electrolysis, we may reference to corresponding textbooks as known to the person of ordinary skill in the art.

Only to avoid misunderstandings it is noted that a list of alternatives "$A_i, A_2, A_3, ..., A_{n-1}$ and/or $A_n$" shall be understood as "$A_1$ and/or $A_2$ and/or $A_3$ and/or ... and/or $A_{n-1}$ and/or $A_n$" being equivalent to at least one of the set $\{A_1, A_2, ..., A_n\}$, wherein $n$ is a positive integer.

As normally understood by a person of skill in the art, a fluid can be gaseous or a liquid or a mixture of both phases. A fluid thus distinguishes from solid matter. A powder, although it can flow and be fluidized is considered as solid, because each powder grain is a solid matter.

## Description of Drawings

In the following, the invention will be described by way of example, without limitation of the general inventive

concept, on examples of embodiment with reference to the drawings.

Figure 1 shows a diagrammatic representation of a method for manufacturing calcined raw meal.

Figure 2 shows a cement clinker line.

The embodiment of a method 100 for providing calcined raw meal 103 which may be used in a subsequent optional step to manufacture cement clinker may comprise step 110 of reacting a raw meal 101, comprising at least limestone or another $CaCO_3$-source, with a carboxylic acid (ROOH). The carboxylic acid (ROOH) are represented by reference numeral 108.

In this optional step 110 at least $Ca(RCOO)_2$ is produced (being symbolized by reference numeral 102) wherein the symbol "R" represents an organic group, as well referred to as organic rest (see (eq 10) and/or (eq 11)). In other words, reference numeral 102 represents the intermediate raw meal. Further $H_2O$ and $CO_2$ are produced in optional step 110. The reaction(s) may preferably be performed in a temperature range of 175° to 225°C. In this temperature range water of crystallization remains in the gaseous phase. At least approximately normal pressure ($1000hPa \pm 100hPa$) is particularly suited, but other pressures may be used as well. Preferably, the such obtained intermediate product is subsequently separated (e.g. filtered) into its solid components 102, i.e. the intermediate raw meal, and its fluid components $H_2O$ and $CO_2$. This optional separation (filtering) step is symbolized by box 115. The such obtained intermediate raw meal 102 may subsequently be heated in optional step 120 to thereby decompose the calcium carboxylate and/or calcium methane sulfonate of the intermediate raw meal 102 into CaO being at least a component of the such obtained calcined raw meal 103. Further optional products are an aldehyde and/or ketones which may optionally be separated as indicated by dashed lines to box 128. The formation of CaO can be enhanced if the gaseous products of the decomposition are withdrawn, preferably during the optional converting step (see dashed lines to box 128). Alternatively and/or in addition, the optional step of withdrawing the gaseous products can be performed after the optional converting step, this sequence is depicted in FIG. 1 by box 125. The (preferably such obtained) calcined raw meal 103 may optionally be subjected to sintering being indicated by box 130. The gaseous products of the optional converting step 110 may be separated by condensation, thereby removing preferably at least the aldehyde and/or the ketone from the mixture (see box 128). The remaining mixture may be cooled down below the boiling point of water to condense water in the mixture. The remaining mixture may comprise $CO_2$, CO and $H_2$ and may be used as syngas. Alternatively, it may be burnt to essentially produce $CO_2$ and $H_2O$, e.g., in the kiln or as energy source for the first heater or to provide process energy for any other subprocess in a cement clinker plant.

The method may comprise producing $CO_2$ in multiple process steps. At least a portion of the $CO_2$ released by at least one of these process steps may be collected and electrochemically reduced to a carboxylic acid (108) as symbolized by optional box 140. At least a portion of the (preferably such obtained) carboxylic acid may be used in the reacting step 110 to convert the raw meal (101) into the intermediate raw meal (102).

It should be noted that any of these steps can be performed independently from each other as the as long as the required starting materials are sourced. But preferably at least two of the steps described above are combined. The sequence of the steps may be altered, but the depicted sequence is preferred. In modern plants, one would favor a continuous process over a batch process, i.e. the steps may be performed at the same time, while the product of an earlier step is preferably continuously provided as starting material to a subsequent step.

FIG. 2 shows a cement clinker line 200 or more precisely a part thereof. For simplicity, well known optional and as well as non-optional components of these cement clinker lines have been omitted, like for example, the raw-meal mill, the raw-meal preheater, the kiln 400, the clinker cooler and the exhaust stack, a power plant, to name only a few.

For simplicity any material stream herein is represented by a connection (an arrow) and said connections represent as well conveying means enabling to provide the stream from the source of the stream to the drain of the stream. Connections for fluids are typically conduits, like pipes. Connections for solid matter may be conveying belts, screw conveyers, chutes, but as well conduits for conveying fluidized or dispersed solid matter. The tips of the arrows indicate the conveying direction, i.e., the tip of an arrow points to the drain of the stream being represented by the respective arrow.

$CO_2$ being produced in the cement clinker line and/or being provided from an external process (e.g., from a power plant burning carbon based fuels) may be provided as a $CO_2$ stream from such a $CO_2$ source 201 and may be dissolved in a first acid and/or water in a mixer 210, which may be considered as a first scrubber 210. The first acid may be at least initially provided from an external source 202 as a starting material and/or may be produced by the cement clinker line 200 as explained herein. Preferred examples of such first acids are carboxylic acids like formic acid, acetic acid or the like as listed in the section *Summary of the invention* and the appended claims. Alternatively or in addition, the first acid may consist of comprise at least one sulfonic acid, like e.g. methane sulfonic acid. Other examples are again provided in the section *Summary of the invention.*

The mixer 210 has an outlet 218. The outlet 218 of the mixer 210 may provide a stream 219 to a dissolved

$CO_2$-inlet 221 of a cathode chamber 220 of an electrolytic cell. The optional stream 219 is represented by an arrow which as well represents the corresponding connection (i.e. the conveying means). Below, we will not again distinguish between streams and connections, as one implies the other. Both terms represent two aspects of the same technical teaching.

In the optional cathode chamber, the dissolved $CO_2$ flow is contacted with an optional cathode 225. Preferably, the dissolved $CO_2$ flows along the optional cathode 225 or at least along a section of the cathode 225. The cathode 225 may be of or comprise at least one of In, Sn, Hg, Bi, Pb, Cu and/or doped graphene. N-doped graphed is a preferred doped graphene. At the cathode 225, the dissolved $CO_2$ is reduced to a second acid. The second acid being produced by the reduction depends on the choice of the cathode 225. Preferably the cathode 225 is a catalyst for reduction of the $CO_2$ to a carboxylic acid, preferably the same carboxylic or sulfonic acid as the first acid. In other words, the first acid and the second acid are preferably identical.

The acid-dissolved $CO_2$ may thus be depleted from the first acid, while flowing over the cathode. The flow thus converts into a mixture of the first and the second acid, which may leave the cathode via an optional cathode chamber outlet 228. This mixture can as well be referred to as $CO_2$-depleted (first) acid. Of course, if the first and second acids are selected to be identical, one cannot chemically distinguish which molecule was already provided to the mixer 210 and which molecule has been produced by reducing dissolved $CO_2$ (physical methods, however allow to: for example mass spectroscopy could distinguish the molecules by using different carbon isotopes for the different starting materials provided to the mixer ).

The optional reduction in the cathode chamber (220) preferably takes place at slightly elevated temperatures to thermodynamically favor the $CO_2$ reduction to the second acid over the generation of $H_2$ (HER, as explained above). Slightly elevated means in this context elevated by a positive value $\theta°$ above standard conditions (commonly "STP": 273.15 K, 1.000hPa), preferably, $\theta \in \{30, 35, 40, 45, 50, 55, 60, 65, 70\}$. An upper limit is provided by the boiling temperature of the electrolyte (i.e., the first acid) at the given pressure. The lower limit is given by the freezing temperature of the electrolyte. A preferred range of $\theta$ is about 40 to 80, i.e., $40° \leq \theta° \leq 80°$, particularly preferred is $50° \leq \theta° \leq 60$. This temperature range can be obtained by prewarming the first acid upstream of the cathode chamber 220, e.g., upstream of the mixer 219 as symbolized by a heater 246. The heater 246 may be or comprise a heat exchanger being provided with heat being recuperated at another part of the cement clinker line 200. An example of such heat recuperation is the use of heat being withdrawn from clinker cooler exhaust gas and/or the heat being removed from the stream 229 leaving the cathode chamber outlet 229 by another optional heat exchanger 247 for cooling the stream 229. Heater 246 and heat exchanger 247 (cooler 247) may as well be combined into an indirect heat transfer heat exchanger, preferably in a counterflow indirect heat transfer type heat exchanger.

The optional electrolytic cell 450 may further comprise an optional anode chamber 230. The optional anode chamber has an anode 233 and may be separated from the cathode chamber by an optional cation (e.g. proton) permeable membrane 455. The anode chamber serves as cation (proton) source for the reduction of the dissolved $CO_2$ at the cathode 225 to the second acid in the cathode chamber 220 (see *(eq 2)* and *(eq 3)*). Due to the electric potential between the anode and the cathode, $H_2O$ molecules are split into $2H^+$ and $O^{2-}$. Two $O^{2-}$ anion are oxidized at the anode into $O_2$ (see *(eq 9)*). The $O_2$ is another secondary product of the cement clinker line and leaves the anode chamber as a stream 239, which may as well comprise $H_2O$. The stream 239 may be cooled using a heat exchanger 347 (cooler 347) and separated from the stream in a gas-liquid separator 380. The such obtained $H_2O$ may be cycled and provided to the anode chamber 230, preferably, after being heated by heater 346. Heater 346 may as well be a part of a heat exchanger being sourced by recuperated process heat. The $O_2$ stream leaving the gas-liquid separator is indicated by reference numeral 389. The $O_2$ produced at the anode may be used, e.g. to replace combustion air in the kiln 400, e.g. to replace at least in part oxygen being provided as primary air to the burner of the kiln 400, to thereby reduce the amount of $N_2$ in the exhaust gas of the kiln. This reduction thus decreases the total amount of exhaust gas and at the same time increases the $CO_2$-concentration on the exhaust gas. The exhaust gas may hence be used as $CO_2$-source 202. Of course it is preferably dedusted and cooled prior to providing it to the mixer 202. Other purification steps may as well be advantageous.

As already apparent, the mixture of the first and second acids being withdrawn from the cathode chamber outlet 228 is symbolized by a flow 229. Only for simplicity, we assume the first acid and the second acid to be to be identical, to be e.g., both formic acid or both acetic acid). In case they would be different substances one would have to separate the first and second acid, e.g., by distillation or other means. This optional separation is symbolized by a branching point 240.

From the branching point, the first acid may flow back as optional stream 248 to the optional mixer 210. An optional pump may be placed in the stream 248 as well as an optional heater 246. The optional pump 245 may as well be placed in a different place of cement clinker line.

From the optional branching point 240, the second acid may flow to an optional liquid-gas separator 250 (vulgo "filter") as indicated by flow 249. Unintended side products of the electrolysis like $H_2$ and CO still being (potentially) in the flow 259 are preferably removed. In case the first and second acids are different, the unintended side products can

already be removed at optional branching point 240. The liquid-gas separator's 250 outlet may provide CO and $H_2$ which are to a certain extend unavoidable side products of the reduction of $CO_2$ (see *(eq 4)* and *(eq 5)*). At least these side products may be oxidized in the kiln and/or a gas turbine to $CO_2$ and $H_2O$ and/or in a burner providing process heat to a reactor and/or used to produce syngas and/or for any other purpose. The heat being released by oxidizing the $CO_2$ and $H_2O$ may be used, e.g. in the optional heater 246 to reheat the optional stream 248 of the first acid prior to providing it to the optional cathode chamber 220.

The fluid constituent is the optionally intended aqueous second acid, symbolized as optional stream 259, for example a formic acid stream and/or an acetic acid stream. In an embodiment this second acid may be withdrawn fully or in part from the process and used for any other suited purpose as indicated by optional stream 268. In another embodiment, which may be combined with the embodiment described in the previous sentence as represented by optional branching point 260, at least a portion of the second acid may be provided as optional stream 269 to an optional first reactor 270 and may be reacted therein with raw meal comprising at least $CaCO_3$ or consisting of $CaCO_3$.

In this optional first reactor 270, the Calcium (Ca) salt of the second acid may be formed, as well as $CO_2$ and $H_2O$. The Ca salt is the main ingredient of the intermediate raw meal, as explained in the section *Summary of the invention.* The reactions taking place in the optional first reactor are essentially those of (eq 10) and/or (eq 11). The corresponding method step is herein referred to as reacting step. The temperature in the optional first reactor 270 is preferably be controlled to be above the boiling point of water, to thereby ensure that the water of crystallization is gaseous and can be separated from the solid. The obtained optional gas stream 278 may comprise essentially $CO_2$ and $H_2O(g)$ and may be provided to an optional gas separator 280, e.g. via another optional heat exchanger 285. The $H_2O$ may preferably be removed from the optional stream 278 and may be used for other purposes 420 as indicated by optional stream 288. $CO_2$ can be separated for example by simply condensing the $H_2O$, although a portion of the $CO_2$ is likely to be dissolved in the $H_2O$, depending on the temperature. $CO_2$ can be withdrawn as gaseous optional stream 289 from the optional gas separator 280 and may be provided to the optional mixer 210. Summarizing, one may say that a portion of the carbon atoms may in an embodiment hence be held in a cycle formed essentially by the optional mixer 201, the optional cathode chamber 220 and the optional first reactor 270. Another portion of the carbon atoms may preferably be removed from the cement clinker line 200 as an aldehyde or ketone: This can be obtained by withdrawing the Ca-salt obtained in the optional first reactor 270 from the optional first reactor 270 (by optional stream 279). Preferably, this stream 279 may be heated as indicated by an optional heater 295 and may be provided to an optional first heater 290. In this optional first heater 290, the Ca-salt may be decomposed into at least one of an aldehyde, a ketone , $CO_2$, $H_2O$ and CaO. The reactions in this first heater 290 can be summarized by (eqs 12) and/or (eqs 13) and the corresponding method step is herein referred to as converting step or as well as heating step.

The CaO being produced in the optional first heater 290 is the main component of so called calcined raw meal and may be provided to a kiln 400 for sintering it with other starting materials (like for example clay) to cement clinker. The other components of the raw meal may be included in the starting material being provided initially by a raw meal/$CaCO_3$ source 201 to the first reactor 270 and/or added to the stream 288 comprising at least CaO. In the terminology of this application, one may hence say that the raw meal stream 272 being provided to the optional first reactor 270 comprises at least $CaCO_3$ and may optionally comprise further constituents. The intermediate raw meal stream 279 provided by the first reactor thus comprises at least the Ca salt of the second acid and the calcined raw meal stream comprises at least CaO.

In the first heater, the reactions as described by (eqs 12)and/or (eqs 13) take place. At the temperatures present in the first heater 290, only the calcined raw meal at least comprising CaO is solid, the other products like $CO_2$, $H_2O$, $H_2CO$ or other aldehydes and/or ketones are gaseous and are preferably withdrawn from the optional first heater 290 as indicated by optional stream 299. The stream 299 is preferably cooled down below the condensation temperature of the aldehyde and $H_2O$ as symbolized by the optional heat exchanger 305 (cooler 305). The thereby recuperated heat may be used as process heat in the cement clinker line 200. For example, the optional heat exchanger 305, may be a heat source for the optional heater 356 or any other heater. The still gaseous $CO_2$ may be withdrawn and merged into stream 278 or by some other route be provided to the optional mixer 210. The aldehyde and ketone and the $H_2O$ in the remaining stream 309 may or may not be separated from each other. The aldehyde and/or ketone is an optional but valuable secondary product of the process. The water maybe used for example as feed water source 204 of the anode chamber 230.

List of reference numerals

| | |
|---|---|
| 100 | method |
| 101 | raw meal / $CaCO_3$ |
| 102 | intermediate raw meal |

103 calcined raw meal
108 carboxylic acid (ROOH)
110 method step of reacting raw meal 101, (optional)
115 method step of separating intermediate raw meal and fluid products like for example $CO_2$ and $H_2O$, (optional)
120 step of heating intermediate raw meal 102, (optional)
125 step of withdrawing the gaseous products, (optional)
128 method step of separating calcined raw meal and fluid products like for example $CO_2$ and an aldehyde, (optional).
130 method step of sintering calcined raw meal, (optional)
140 method step of electrochemically reducing $CO_2$, (optional)

200 cement clinker line
201 $CaCO_3$ source / raw meal source
202 $CO_2$-source, (optional)
203 first acid source, (optional)
218 outlet of mixer / first scrubber 210 providing a stream 219, (optional)
219 stream of $CO_2$- being dissolved in water and/or a first acid / conduit
219 connecting outlet218 of mixer 210 with dissolved-$CO_2$ inlet 221 of the cathode chamber 220, (optional)
220 cathode chamber of electrolytic cell 450, (optional)
221 dissolved $CO_2$ inlet, (optional)
225 cathode, (optional)
228 cathode chamber outlet, (optional)
229 stream of first and/or second acid , (optional)
230 anode chamber of electrolytic cell, (optional)
235 anode, (optional)
240 (first) branching point, (optional)
245 pump, (optional)
247 heat exchanger / heater, (optional)
248 first acid flow, (optional)
249 second acid flow, (optional)
250 gas-liquid separator, (optional)
258 stream of intended side products, (optional)
259 stream of second acid , (optional)
260 (second) branching point, optional
268 second acid stream, (optional)
269 second acid stream, (optional)
270 first reactor, (optional)
270 stream of $CaCO_3$ comprising raw meal to the first reactor 270, (optional)
278 stream of $CO_2$ and $H_2O$(g) from the first reactor 270 to first heater 290, (optional)
280 gas separator, (optional)
290 first heater, (optional)
298 CaO comprising calcined raw meal stream, (optional)
299 stream of gaseous products, (optional)
295 heater, (optional)
346 heater / heat exchanger, (optional)
347 cooler / heat exchanger, (optional)
380 gas/liquid separator, (optional)
400 kiln, (optional)
409 clinker, (optional)
420 water drain, (optional)
410 secondary product outlet, (optional)
450 electrolytic cell, (optional)
455 membrane, (optional)

## Claims

**1.** A method for operating a cement clinker line (200), the method comprising at least:

- converting a $CaCO_3$ comprising raw meal (101) into calcined raw meal (103) and at least $CO_2$ and/or sintering calcined raw (103) meal in a kiln (400), thereby obtaining at least cement clinker (409) and optionally $CO_2$;
- separating the $CO_2$ from the calcined raw (403) meal and/or the clinker (409),
**characterized in that** it further comprises the steps of

(i) dissolving at least a portion of the $CO_2$ in a first carboxylic acid and/or a first sulfonic acid (108) and/or liquifying at least a portion of the $CO_2$;
(ii) reducing the dissolved and/or liquified $CO_2$ electrolytically at a cathode (235) of an electrolytic cell (450) to a second carboxylic acid, wherein the first carboxylic acid and/or first sulfonic acid (108) is used as an electrolyte.

2. The method of claim 1, **characterized in that** the first and/or the second carboxylic acids are or comprise methanoic acid ($H_2CO_2$) and/or ethanoic acid ($CH_3COOH$) and/or methane sulfonic acid ($H_3CSO_2OH$) or a mixture thereof.

3. The method of claim 1 or 2, **characterized in that** the reducing step comprises using a piece of or comprising at least one of In, Sn, Tl, Ag, Au, Cd, Mn, Hg, Bi, Pb, Cu and/or doped graphene as cathode.

4. The method of one of claims 1 to 3, **characterized in that** the electrolyte is heated at least $\theta$*°C* above ambient temperature, wherein $\theta \in \{2, 5, 10, 15, 20, 25, 30, 40, 50, 60, 70\}$.

5. The method of one of claims 1 to 4, **characterized in that** it further comprises withdrawing at least a portion of the first and second carboxylic acid and/ or first and second sulfonic acid from the electrolytic cell.

6. The method of one of claim 5, **characterized in that** it further comprises using a first fraction of the withdrawn carboxylic acid and/ or sulfonic acid in the dissolving step.

7. The method of claim 5 or 6, **characterized in that** it further comprises as a part of the converting step, reacting at least a second fraction of the withdrawn carboxylic acid and/ or sulfonic acid with $CaCO_3$ comprised in the raw meal, thereby converting at least as portion of the raw meal into an intermediate raw meal comprising at least calcium carboxylate and/or calcium sulfonate, respectively.

8. The method of the previous claim, **characterized in that** it further comprises as a part of the converting step, heating the intermediate raw meal at least to the decomposition temperature of the calcium carboxylate and/or calcium sulfonate comprised therein, thereby obtaining at least calcined raw meal and the corresponding aldehyde and/or ketone.

9. The method of the previous claim, **characterized in that** at least a portion of the aldehyde and/or ketone is withdrawn from the calcined raw meal and **in that** the calcined raw meal is subsequently sintered to cement clinker.

10. The method of one of claims 1, 3 to 9 , **characterized in that** the first or second carboxylic acid and/or the sulfonic acid, respectively, is at least one of the acids comprised in a list being formed by methanoic acid ($H_2CO_2$), ethanoic acid ($CH_3COOH$), propionic acid ($CH_3CH_2CO_2H$), butanoic acid ($CH_3CH_2CH_2CO_2H$), pentanoic acid ($CH_3(CH_2)_3COOH$), hexanoic acid ($CH_3(CH_2)_4COOH$), heptanoic acid ($CH_3(CH_2)_5COOH$), octanoic acid ($CH_3(CH_2)_6COOH$), nonanoic acid ($CH_3(CH_2)_7COOH$), decanoic acid ($CH_3(CH_2)_8COOH$), Oxalic acid (HO2C-CO2H), Pyruvic acid ($CH_3COCOOH$), Glyoxylic acid (OCHCOOH), Glycolic acid ($HOCH_2CO_2H$) and Methane sulfonic acid ($CH_3SO_3H$).

11. The method of one of the previous claims, further comprising, withdrawing $O_2$ from an anode of the electrolytic cell and providing the $O_2$ to a burner of the kiln and/or using the $O_2$ as to at least partial replace the secondary air and/or tertiary air.

12. The method of one of the previous claims, **characterized in that** the alkali ion concentration of the electrolyte in which the $CO_2$ is dissolved and/or in the liquified $CO_2$ is below 0.49mol/liter.

13. A cement clinker line comprising at least a $CO_2$-source with a $CO_2$-outlet, wherein the $CO_2$-source comprises as least one of a kiln (400) for sintering calcined raw meal into cement clinker (409), a calciner for converting raw meal

into calcined raw meal, and a fuel combustion unit, **characterized in that** the cement clinker line (200) further comprises at least:

- a $CO_2$ liquefier and/or a first scrubber (210) having at least

◦ a $CO_2$ inlet being connected to the $CO_2$-outlet of the $CO_2$-source (201, 400),
◦ an acid inlet (203) being connected to at least one source of a first carboxylic acid and/or a first sulfonic acid and
◦ a liquified $CO_2$-outlet and/or an acid-dissolved $CO_2$-outlet (218),

- an electrolytic cell (450) comprising at least

◦ a first fluid chamber (220) with a $CO_2$ inlet being connected with the liquified $CO_2$-outlet and/or the acid-dissolved $CO_2$-outlet (218) of the $CO_2$ liquefier and/or the first scrubber (210), respectively, and with a $CO_2$-depleted acid outlet (228), and with at least one cathode (225),
◦ a second fluid chamber (230), wherein the first and second fluid chambers (220, 203) are separated by a proton permeable membrane (455),
o a cathode (225) in the cathode chamber (220) and an anode (235) in the anode chamber (230),

**14.** The cement clinker line (200) of the previous claim, **characterized in that** the calciner comprises at least a first reactor (270) and a first heater (290), wherein

- the first reactor (270) further comprises at least:

◦ a reactor volume,
◦ a $CO_2$-depleted acid inlet being connected to the $CO_2$-depleted acid outlet (228) of the electrolytic cell (450) and being in fluid communication with the reactor volume,
◦ a raw meal inlet being in fluid communication with the reactor volume, and
◦ an intermediate raw meal outlet, being in fluid communication with the reactor volume,

- the first heater (290) has

◦ an intermediate raw meal inlet being connected to the first reactor's intermediate raw meal outlet,
o a heating volume in fluid communication with the intermediate raw meal inlet, and
o a calcined raw meal outlet being in fluid communication with the heating volume,

- the kiln (400) has at least a calcined raw meal inlet and a clinker outlet, wherein the calcined raw meal inlet is connected to the heater's calcined raw meal outlet.

**Patentansprüche**

**1.** Ein Verfahren zum Betreiben einer Zementklinkerlinie (200), wobei das Verfahren mindestens Folgendes aufweist:

- Umwandeln eines $CaCO_3$ aufweisenden Rohmehls (101) in kalziniertes Rohmehl (103) und mindestens $CO_2$ und/oder Sintern von kalziniertem Rohmehl (103) in einem Ofen (400), wodurch mindestens Zementklinker (409) und optional $CO_2$ erhalten werden;
- Abtrennen des $CO_2$ aus dem kalzinierten Rohmehl (403) und/oder dem Klinker (409),

**dadurch gekennzeichnet, dass** es weiterhin die folgenden Schritte aufweist:

(i) Auflösen mindestens eines Teils des $CO_2$ in einer ersten Carbonsäure und/oder einer ersten Sulfonsäure (108) und/oder Verflüssigen mindestens eines Teils des $CO_2$;
(ii) Elektrolytisches Reduzieren des gelösten und/oder verflüssigten $CO_2$ an einer Kathode (235) einer Elektrolysezelle (450) zu einer zweiten Carbonsäure, wobei die erste Carbonsäure und/oder erste Sulfonsäure (108) als Elektrolyt verwendet wird.

**2.** Das Verfahren nach Anspruch 1, **dadurch gekennzeichnet, dass** die ersten und/oder die zweiten Carbonsäuren

Methansäure ($H_2CO_2$) und/oder Ethansäure ($CH_3COOH$) und/oder Methansulfonsäure ($H_3CSO_2OH$) oder eine Mischung davon sind oder diese aufweisen.

**3.** Das Verfahren nach Anspruch 1 oder 2, **dadurch gekennzeichnet, dass** der Reduktionsschritt die Verwendung eines Stücks aus oder aufweisend mindestens eines von In, Sn, Tl, Ag, Au, Cd, Mn, Hg, Bi, Pb, Cu und/oder dotiertes Graphen als Kathode aufweist.

**4.** Das Verfahren nach einem der Ansprüche 1 bis 3, **dadurch gekennzeichnet, dass** das Elektrolyt um mindestens $\theta$°C über Umgebungstemperatur erhitzt wird, wobei $\theta \in \{2, 5, 10, 15, 20, 25, 30, 40, 50, 60, 70\}$.

**5.** Das Verfahren nach einem der Ansprüche 1 bis 4, **dadurch gekennzeichnet, dass** es weiterhin die Entnahme mindestens eines Teils der ersten und zweiten Carbonsäure und/oder der ersten und zweiten Sulfonsäure aus der Elektrolysezelle aufweist.

**6.** Das Verfahren nach Anspruch 5, **dadurch gekennzeichnet, dass** es weiterhin die Verwendung eines ersten Anteils der entnommenen Carbonsäure und/oder Sulfonsäure im Lösungsschritt aufweist.

**7.** Das Verfahren nach Anspruch 5 oder 6, **dadurch gekennzeichnet, dass** es weiterhin als Teil des Umwandlungsschritts, Reagieren mindestens eines zweiten Anteils der entnommenen Carbonsäure und/oder Sulfonsäure mit im Rohmehl enthaltenem *$CaCO_3$* aufweist, wodurch mindestens ein Teil des Rohmehls in ein Zwischen-Rohmehl, welches mindestens Calciumcarboxylat bzw. Calciumsulfonat aufweist, umgewandelt wird.

**8.** Das Verfahren nach dem vorhergehenden Anspruch, **dadurch gekennzeichnet, dass** es weiterhin als Teil des Umwandlungsschritts das Erhitzen des Zwischen-Rohmehls mindestens auf die Zersetzungstemperatur des darin enthaltenen Calciumcarboxylats und/oder Calciumsulfonats aufweist, wodurch mindestens kalziniertes Rohmehl und das entsprechenden Aldehyd und/oder Keton erhalten wird.

**9.** Das Verfahren nach dem vorhergehenden Anspruch, **dadurch gekennzeichnet, dass** dem kalzinierten Rohmehl mindestens ein Teil des Aldehyds und/oder Ketons entzogen wird und dass das kalzinierte Rohmehl anschließend zu Zementklinker gesintert wird.

**10.** Das Verfahren nach einem der Ansprüche 1, 3 bis 9, **dadurch gekennzeichnet, dass** die erste oder zweite Carbonsäure bzw. die Sulfonsäure mindestens eine der Säuren, enthalten in einer Liste bestehend aus Methansäure ($H_2CO_2$), Ethansäure ($CH_3COOH$), Propionsäure ($CH_3CH_2CO_2H$), Butansäure ($CH_3CH_2CH_2CO_2H$), Pentansäure ($CH_3(CH_2)_3COOH$), Hexansäure ($CH_3(CH_2)_4COOH$), Heptansäure ($CH_3(CH_2)_5COOH$), Oktansäure ($CH_3(CH_2)_6COOH$), Nonansäure ($CH_3(CH_2)_7COOH$), Decansäure ($CH_3(CH_2)_8COOH$), Oxalsäure ($HO_2C-CO_2H$), Brenztraubensäure ($CH_3COCOOH$), Glyoxylsäure ($OCHCOOH$), Glykolsäure ($HOCH_2CO_2H$) und Methansulfonsäure ($CH_3SO_3H$) ist.

**11.** Das Verfahren nach einem der vorhergehenden Ansprüche, weiterhin aufweisend Entnehmen von $O_2$ von einer Anode der Elektrolysezelle und Bereitstellen des $O_2$ an einen Brenner des Ofens und/oder Verwenden des $O_2$ zum zumindest teilweisen Ersetzen der Sekundärluft und/oder der Tertiärluft.

**12.** Das Verfahren nach einem der vorhergehenden Ansprüche, **dadurch gekennzeichnet, dass** die Alkaliionenkonzentration des Elektrolyten, in dem das $CO_2$ gelöst ist und/oder im verflüssigten $CO_2$, unter 0,49 mol/Liter liegt.

**13.** Eine Zementklinkerlinie, aufweisend mindestens eine $CO_2$-Quelle mit einem $CO_2$-Auslass, wobei die $CO_2$-Quelle mindestens eines von einem Ofen (400) zum Sintern von kalziniertem Rohmehl zu Zementklinker (409), einem Kalzinator zum Umwandeln von Rohmehl in kalziniertes Rohmehl, und einer Brennstoffverbrennungseinheit aufweist, **dadurch gekennzeichnet, dass** die Zementklinkerlinie (200) weiterhin mindestens Folgendes aufweist:

- einen $CO_2$-Verflüssiger und/oder einen ersten Wäscher (210) mit mindestens

  o einem $CO_2$-Einlass, der mit dem $CO_2$-Auslass der $CO_2$-Quelle (201, 400) verbunden ist,
  o einem Säureeinlass (203), der mit mindestens einer Quelle einer ersten Carbonsäure und/oder einer ersten Sulfonsäure verbunden ist und
  o einen Auslass für verflüssigtes $CO_2$ und/oder ein Auslass für säuregelöstes $CO_2$ (218),

- eine Elektrolysezelle (450), aufweisend mindestens

o eine erste Fluidkammer (220) mit einem $CO_2$-Einlass, der mit dem Auslass für verflüssigtes $CO_2$ und/oder dem Auslass für säuregelöstes $CO_2$ (218) des $CO_2$-Verflüssigers bzw. des ersten Wäschers (210) verbunden ist, und mit einem $CO_2$-abgereicherten Säureauslass (228), und mit mindestens einer Kathode (225),
o eine zweite Fluidkammer (230), wobei die ersten und zweiten Fluidkammern (220, 203) durch eine protonendurchlässige Membran (455) getrennt sind,
o eine Kathode (225) in der Kathodenkammer (220) und eine Anode (235) in der Anodenkammer (230).

**14.** Die Zementklinkerlinie (200) nach dem vorherigen Anspruch, **dadurch gekennzeichnet, dass** der Kalzinator mindestens einen ersten Reaktor (270) und einen ersten Erhitzer (290) aufweist, wobei

- der erste Reaktor (270) weiterhin mindestens aufweist

o ein Reaktorvolumen,
o einen Einlass für $CO_2$-abgereicherte Säure, der mit dem Auslass (228) für $CO_2$-abgereicherte Säure der Elektrolysezelle (450) verbunden ist und in Fluidverbindung mit dem Reaktorvolumen steht,
o ein Rohmehleinlass, der in Fluidverbindung mit dem Reaktorvolumen steht, und
o einen Zwischen-Rohmehlauslass, der in Fluidverbindung mit dem Reaktorvolumen steht,

- wobei der erste Erhitzer (290) Folgendes aufweist

o einen Zwischen-Rohmehleinlass, der mit dem Zwischen-Rohmehlauslass des ersten Reaktors verbunden ist,
o ein Heizvolumen in Fluidverbindung mit dem Zwischen-Rohmehleinlass, und
o einen Auslass für kalziniertes Rohmehl, der in Fluidverbindung mit dem Heizvolumen steht,

- wobei der Ofen (400) mindestens einen Einlass für kalziniertes Rohmehl und einen Klinkerauslass aufweist, wobei der Einlass für kalziniertes Rohmehl mit dem Auslass für kalziniertes Rohmehl des Erhitzers verbunden ist.

**Revendications**

**1.** Procédé de fonctionnement d'une ligne de clinker de ciment (200), le procédé comprenant au moins :

- la conversion d'une farine crue (101) comprenant du $CaCO_3$ en farine crue calcinée (103) et au moins en $CO_2$ et/ou le frittage de farine crue calcinée (103) dans un four (400), ce qui permet d'obtenir au moins du clinker de ciment (409) et facultativement du $CO_2$ ;
- la séparation du $CO_2$ de la farine crue calcinée (403) et/ou du clinker (409),
**caractérisé en ce qu'**il comprend en outre les étapes de

(i) dissolution d'au moins une portion du $CO_2$ dans un premier acide carboxylique et/ou un premier acide sulfonique (108) et/ou liquéfaction d'au moins une portion du $CO_2$ ;
(ii) réduction électrolytique du $CO_2$ dissous et/ou liquéfié au niveau d'une cathode (235) d'une cellule électrolytique (450) en un second acide carboxylique,

dans lequel le premier acide carboxylique et/ou le premier acide sulfonique (108) sont utilisés comme électrolyte.

**2.** Procédé selon la revendication 1, **caractérisé en ce que** le premier et/ou le second acide carboxylique sont ou comprennent l'acide méthanoïque ($H_2CO_2$) et/ou l'acide éthanoïque ($CH_3COOH$) et/ou l'acide méthanesulfonique ($H_3CSO_2OH$) ou un de leurs mélanges.

**3.** Procédé selon la revendication 1 ou 2, **caractérisé en ce que**
l'étape de réduction comprend l'utilisation d'une partie, ou comprenant au moins un, parmi : In, Sn, Tl, Ag, Au, Cd, Mn, Hg, Bi, Pb, Cu et/ou du graphène dopé comme cathode.

**4.** Procédé selon l'une des revendications 1 à 3, **caractérisé en ce que** l'électrolyte est chauffé à au moins $\theta$ °C audessus de la température ambiante, dans lequel

$\theta \in \{2, 5, 10, 15, 20, 25, 30, 40, 50, 60, 70\}$.

5. Procédé selon l'une des revendications 1 à 4, **caractérisé en ce qu'**il comprend en outre le retrait d'au moins une portion du premier et du second acide carboxylique et/ou du premier et du second acide sulfonique de la cellule électrolytique.

6. Procédé selon la revendication 5, **caractérisé en ce qu'**il comprend en outre l'utilisation d'une première fraction de l'acide carboxylique et/ou de l'acide sulfonique retirés à l'étape de dissolution.

7. Procédé selon la revendication 5 ou 6, **caractérisé en ce qu'**il comprend en outre, dans le cadre de l'étape de conversion, la réaction d'au moins une seconde fraction de l'acide carboxylique et/ou de l'acide sulfonique retirés avec du $CaCO_3$ compris dans la farine crue, convertissant ainsi au moins une portion de la farine crue en une farine crue intermédiaire comprenant au moins du carboxylate de calcium et/ou du sulfonate de calcium, respectivement.

8. Procédé selon la revendication précédente, **caractérisé en ce qu'**il comprend en outre, dans le cadre de l'étape de conversion, le chauffage de la farine crue intermédiaire au moins jusqu'à la température de décomposition du carboxylate de calcium et/ou du sulfonate de calcium compris à l'intérieur, ce qui permet d'obtenir au moins une farine crue calcinée et l'aldéhyde et/ou la cétone correspondants.

9. Procédé selon la revendication précédente, **caractérisé en ce qu'**au moins une portion de l'aldéhyde et/ou de la cétone est retirée de la farine crue calcinée et **en ce que** la farine crue calcinée est ensuite frittée en clinker de ciment.

10. Procédé selon l'une des revendications 1, 3 à 9, **caractérisé en ce que** le premier ou le second acide carboxylique et/ou l'acide sulfonique, respectivement, sont au moins l'un des acides compris dans une liste qui est formée par l'acide méthanoïque ($H_2CO_2$), l'acide éthanoïque ($CH_3COOH$), l'acide propionique ($CH_3CH_2CO_2H$), l'acide butanoïque ($CH_3CH_2CH_2CO_2H$), l'acide pentanoïque ($CH_3(CH_2)_3COOH$), l'acide hexanoïque ($CH_3(CH_2)_4COOH$), l'acide heptanoïque ($CH_3(CH_2)_5COOH$), l'acide octanoïque ($CH_3(CH_2)_6COOH$), l'acide nonanoïque ($CH_3(CH_2)_7COOH$), l'acide décanoïque ($CH_3(CH_2)_8COOH$), l'acide oxalique ($HO_2C-CO_2H$), l'acide pyruvique ($CH_3COCOOH$), l'acide glyoxylique ($OCHCOOH$), l'acide glycolique ($HOCH_2CO_2H$) et l'acide méthanesulfonique ($CH_3SO_3H$).

11. Procédé selon l'une des revendications précédentes, comprenant en outre, le retrait d'$O_2$ d'une anode de la cellule électrolytique et l'apport de l'$O_2$ à un brûleur du four et/ou l'utilisation de l'$O_2$ pour remplacer au moins partiellement l'air secondaire et/ou l'air tertiaire.

12. Procédé selon l'une des revendications précédentes, **caractérisé en ce que** la concentration en ions alcalins de l'électrolyte dans lequel le $CO_2$ est dissous et/ou dans le $CO_2$ liquéfié est en dessous de 0,49 mol/litre.

13. Ligne de clinker de ciment comprenant au moins une source de $CO_2$ avec une sortie de $CO_2$, dans laquelle la source de $CO_2$ comprend au moins l'un parmi un four (400) pour le frittage de farine crue calcinée en clinker de ciment (409), un calcinateur pour la conversion de farine crue en farine crue calcinée, et une unité de combustion de combustible, **caractérisée en ce que** la ligne de clinker de ciment (200) comprend en outre au moins :

- un liquéfacteur de $CO_2$ et/ou un premier épurateur (210) comportant au moins

  o une entrée de $CO_2$ qui est reliée à la sortie de $CO_2$ de la source de $CO_2$ (201, 400),
  o une entrée d'acide (203) qui est reliée à au moins une source d'un premier acide carboxylique et/ou d'un premier acide sulfonique et
  o une sortie de $CO_2$ liquéfié et/ou une sortie de $CO_2$ dissous dans l'acide (218),

- une cellule électrolytique (450) comprenant au moins

  o une première chambre à fluide (220) avec une entrée de $CO_2$ qui est reliée à la sortie de $CO_2$ liquéfié et/ou à la sortie de $CO_2$ dissous dans l'acide (218) du liquéfacteur de $CO_2$ et/ou du premier épurateur (210), respectivement, et avec une sortie d'acide appauvri en $CO_2$ (228), et avec au moins une cathode (225),
  o une seconde chambre à fluide (230), dans lequel les première et seconde chambres à fluide (220, 203) sont séparées par une membrane perméable aux protons (455),
  o une cathode (225) dans la chambre cathodique (220) et une anode (235) dans la chambre anodique (230).

**14.** Ligne de clinker de ciment (200) selon la revendication précédente, **caractérisée en ce que** le calcinateur comprend au moins un premier réacteur (270) et un premier réchauffeur (290), dans laquelle

- le premier réacteur (270) comprend en outre au moins :

  o un volume de réacteur,
  o une entrée d'acide appauvri en $CO_2$ qui est reliée à la sortie d'acide appauvri en $CO_2$ (228) de la cellule électrolytique (450) et qui est en communication de fluide avec le volume de réacteur,
  o une entrée de farine crue qui est en communication de fluide avec le volume de réacteur, et
  o une sortie de farine crue intermédiaire, qui est en communication de fluide avec le volume de réacteur,

- le premier réchauffeur (290) comporte

  o une entrée de farine crue intermédiaire qui est reliée à la sortie de farine crue intermédiaire du premier réacteur,
  o un volume de chauffage en communication de fluide avec l'entrée de farine crue intermédiaire, et
  o une sortie de farine crue calcinée qui est en communication de fluide avec le volume de chauffage,

- le four (400) comporte au moins une entrée de farine crue calcinée et une sortie de clinker, dans laquelle l'entrée de farine crue calcinée est reliée à la sortie de farine crue calcinée du réchauffeur.

Fig. 1

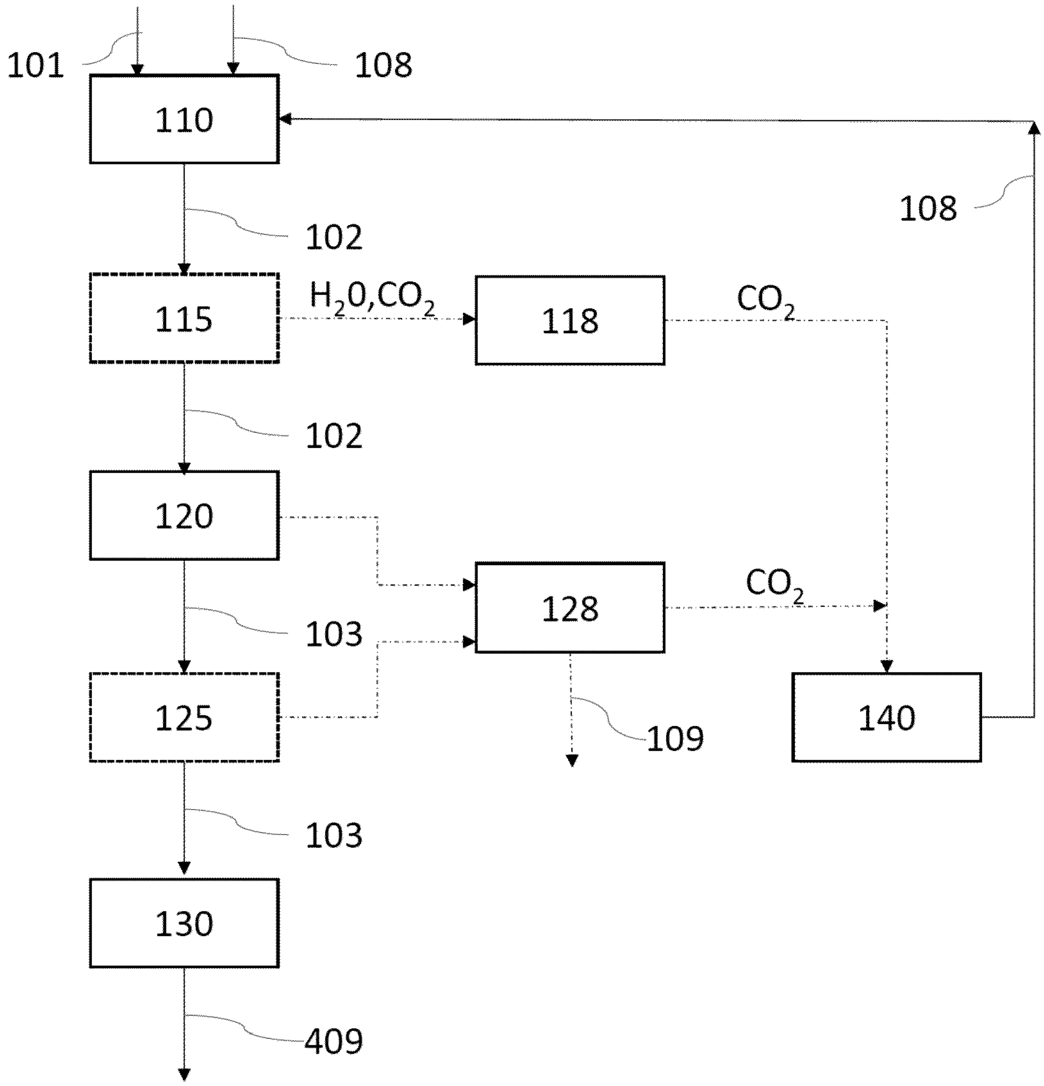
101
108
110
102
115
H20,CO2
118
CO2
108
102
120
128
CO2
103
125
109
140
103
130
409

**Fig. 2**

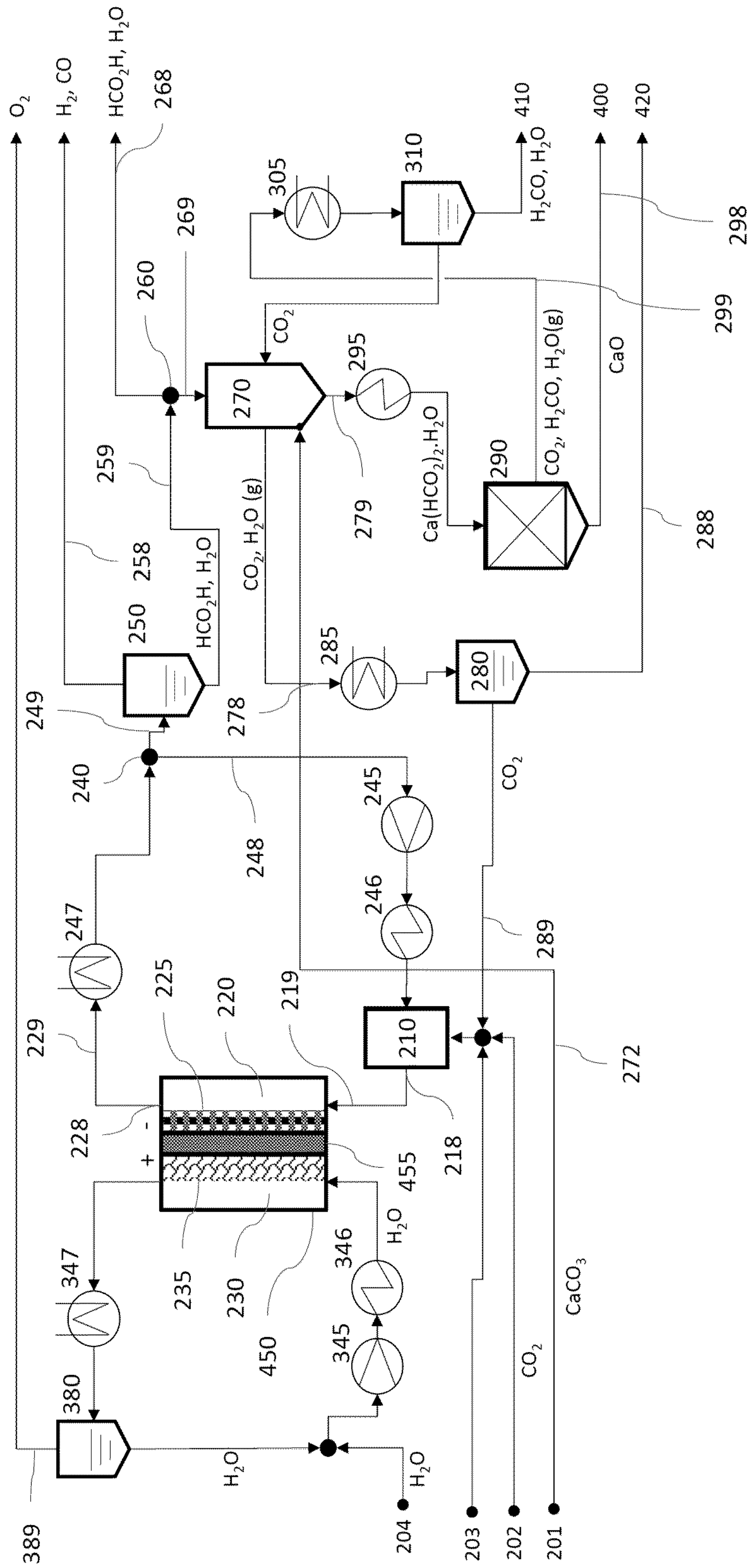
$O_2$
$H_2$, CO
$HCO_2H$, $H_2O$
268
410
400
420
305
310
$H_2CO$, $H_2O$
298
269
260
299
$CO_2$
295
270
290
$CO_2$, $H_2CO$, $H_2O(g)$
CaO
259
279
$Ca(HCO_2)_2{\cdot}H_2O$
258
288
250
$HCO_2H$, $H_2O$
$CO_2$, $H_2O$ (g)
285
249
280
278
240
$CO_2$
245
248
246
247
289
225
220
219
229
210
272
228
218
455
235
230
346
$H_2O$
347
450
345
$CO_2$
$CaCO_3$
380
$H_2O$
$H_2O$
389
204
203
202
201

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021246317 A


### Non-patent literature cited in the description


- Der Herstellungsprozess. **DR. HARDER.** ZKG-Handbuch Zementanlagenbau. Bauverlag BV, 2013, 20-37
- **ROMAN MATTHESSEN ; JAN FRANSAER ; KOEN BINNEMANS ; DIRK E. DE VOS.** Electrocarboxylation: towards sustainable and efficient synthesis of valuable carboxylic acids. *Beilstein Journals, Beilstein J. Org. Chem.,* 2014, vol. 10, 2484-2500
- **FLETCHER C. J. M.** The thermal decomposition of formaldehyde. *Proc. R. Soc. Lond. A,* 1934, vol. 146, 357-362, http://doi.org/10.1098/rspa.1934.0160)
- **A. VALOR et al.** Thermal decomposition of the calcium salts of several carboxylic acids. *Thermochimica Acta,* 2002, vol. 389, 133-130, https://doi.org/10.1016/S0040-6031(02)00010-2